# EUROPÄISCHE PATENTSCHRIFT

(11) **EP 2 238 006 B1**
(45) Veröffentlichungstag und Bekanntmachung des Hinweises auf die Patenterteilung: **20.03.2013**
(21) Anmeldenummer: 09708445.3
(22) Anmeldetag: 15.01.2009
(51) Int. Cl.: B62D 15/02, B60W 10/06, B60W 10/184, B60W 30/165, B60W 30/16, B60W 30/12

(54) **VERFAHREN ZUR LÄNGS- UND QUERFÜHRUNGSUNTERSTÜTZUNG DES FAHRERS EINES FAHRZEUGS UND FAHRERASSISTENZSYSTEM ZUR DURCHFÜHRUNG DES VERFAHRENS**
METHOD FOR THE LONGITUDINAL AND LATERAL GUIDING ASSISTANCE OF A DRIVER OF A VEHICLE AND DRIVER ASSISTANCE SYSTEM FOR CARRYING OUT THE METHOD
PROCEDE D'AIDE AU GUIDAGE LONGITUDINAL ET LATERAL DESTINE AU CONDUCTEUR D'UN VEHICULE ET SYSTEME D'AIDE A LA CONDUITE SERVANT A METTRE EN OEUVRE LEDIT PROCEDE

(30) Priorität: 08.02.2008 DE 102008008172
(43) Veröffentlichungstag der Anmeldung: 13.10.2010
(73) Patentinhaber: Daimler AG, 70327 Stuttgart (DE)
(72) Erfinder: FRITZ, Hans, 73061 Ebersbach (DE)
(74) Vertreter: JENSEN & SON
(86) Internationale Anmeldenummer: PCT/EP2009/000186
(87) Internationale Veröffentlichungsnummer: WO 2009/097952

(56) Entgegenhaltungen:
- EP-A- 1 508 819
- DE-A1- 10 017 279
- US-A1- 2003 120 414

## Beschreibung

Die Erfindung betrifft Verfahren zur Längs- und Querführungsunterstützung des Fahrers eines Fahrzeugs gemäß dem Oberbegriff des Patentanspruchs 1 sowie ein Fahrerassistenzsystem zur Durchführung des Verfahrens.

Aus der DE 100 17 279 A1 ist ein gattungsgemäßes Verfahren bekannt, bei dem der Fahrer des Fahrzeugs entlastet wird, indem in einem für einen Stop-and-go-Betrieb typischen niederen Fahrgeschwindigkeitsbereich die Quer- und Längsführung des Fahrzeugs vom System vollständig übernommen wird. Die Querführung des Fahrzeugs kann dabei wahlweise nach Fahrspurmarkierungen erfolgen, die auf der Fahrbahn aufgebracht sind und mittels einer Videokamera erkannt werden, oder nach einem dem Fahrzeug vorausfahrenden Führungsfahrzeug erfolgen. Nachteilig ist hierbei, dass die Verfügbarkeit der dem Fahrer angebotenen Unterstützung auf den für den Stop-and-go-Betrieb typischen Fahrgeschwindigkeitsbereich beschränkt ist und in diesem Geschwindigkeitsbereich zudem gering ist, da das Fahrerassistenzsystem deaktiviert wird, sobald die zunächst erkannten Fahrspurmarkierungen nicht mehr erkannt werden. Solche Situationen, in denen die Fahrspurmarkierungen nicht mehr erkannt werden, treten jedoch gerade im Stop-and-go-Betrieb häufig auf, da Fahrspurmarkierungen bei den für diesen Betrieb üblichen geringen Fahrzeugzwischenabständen von den vorausfahrenden Fahrzeugen häufig verdeckt werden.

Aus der DE 199 19 644 C2 ist ein Fahrerassistenzsystem zur Unterstützung des Fahrers eines Fahrzeugs bei der Fahrzeugquerführung bekannt, bei dem ein dem Fahrzeug vorausfahrendes Fahrzeug als Führungsfahrzeug detektiert wird und bei dem der Abstand zu dem Führungsfahrzeug sowie dessen Richtungswinkel zu der Längsachse des Fahrzeugs oder der laterale Abstand zwischen dem Fahrzeug und dem Führungsfahrzeug ermittelt werden, um aus diesen Daten ein Lenkstellsignal zu generieren, durch das der Lenkwinkel des Fahrzeugs derart variiert wird, das das Fahrzeug dem Führungsfahrzeug möglichst genau in dessen Bahn nachgeführt wird. Die Unterstützung erfolgt somit im Sinne einer Objektfolgeregelung, bei der das Fahrzeug in seiner Querbewegung dem Führungsfahrzeug nachgeführt wird. Diese Art der Fahrzeugführung wird auch als Deichselregelung bezeichnet, da das Fahrzeug dem Führungsfahrzeug folgt, als ob es mit diesem über eine fiktive Deichsel verbunden wäre. Nachteilig ist hierbei, dass Pendelbewegungen des vorausfahrenden Führungsfahrzeugs auf das Fahrzeug übertragen werden. Solche Pendelbewegungen werden als unkomfortabel empfunden und treten insbesondere in Stausituationen häufig auf, wenn der Fahrer des vorausfahrenden Führungsfahrzeugs, wiederholt nach links oder rechts ausschert, um sich einen Überblick über die Stausituation zu verschaffen.

Der Erfindung liegt die Aufgabe zugrunde, ein Verfahren gemäß dem Oberbegriff des Patentanspruchs 1 anzugeben, das dem Fahrer eine zuverlässige Unterstützung mit hoher Verfügbarkeit und hoher Akzeptanz bietet sowie eine Entlastung durch eine Unterstützung mit hohem Automatisierungsgrad ermöglicht. Der Erfindung liegt weiterhin die Aufgabe zugrunde, Fahrerassistenzsystem zur Durchführung des Verfahrens anzugeben.

Die Aufgabe wird durch die Merkmale der unabhängigen Ansprüche gelöst. Vorteilhafte Ausgestaltungen und Weiterbildungen ergeben sich aus den Unteransprüchen.

Bei dem erfindungsgemäßen Verfahren zur Längs- und Querführungsunterstützung des Fahrers eines Fahrzeugs, wird die Längsführungsunterstützung als Abstandsregelung zur Regelung des Abstands zwischen dem Fahrzeug und einem diesem vorausfahrenden Führungsfahrzeug durchgeführt und die Querführungsunterstützung wird wahlweise als Spurfolgeunterstützung zur Führung des Fahrzeugs längs einer markierten Fahrspur oder als Objektfolgeunterstützung zur Führung des Fahrzeugs nach einer Bewegungsspur des vorausfahrenden Führungsfahrzeugs oder als kombinierte Spur-Objektfolgeunterstützung durchgeführt, wobei die Querführungsunterstützung nur bei Erfüllung von vorbestimmten Betriebsbedingungen verfügbar ist, d.h. dem Fahrer als Unterstützungsmaßnahme angeboten wird, und wobei die vorbestimmten Betriebsbedingungen die Bedingung umfassen, dass die Abstandsregelung aktiv ist und weiterhin die Bedingung umfasst, dass der Abstand zwischen dem Fahrzeug und dem Führungsfahrzeug geringer ist als eine vorbestimmte Abstandsgrenze und/oder dass ein als Deichselwinkel bezeichneter Sichtwinkel vom Fahrzeuge zum Führungsfahrzeug betragsmäßig geringer ist als eine vorbestimmte Winkelgrenze.

Die Querführungsunterstützung kann mit hohem oder mit niedrigem Automatisierungsgrad erfolgen. Ein niedriger Automatisierungsgrad bedeutet, dass der Fahrer seine Lenkaufgabe noch in erheblichem Maß wahrnehmen muss und dass er durch die Querführungsunterstützung somit nur in geringem Maß entlastet wird. Ein hoher Automatisierungsgrad bedeutet hingegen, dass die Lenkaufgabe im Wesentlichen vom System übernommen wird, so dass der Fahrer nicht oder nur in geringem Maß mitlenken muss und damit in höherem Maß als bei niedrigem Automatisierungsgrad entlastet wird. Unter Spurfolgeunterstützung oder Objektfolgeunterstützung wird daher nachfolgend auch eine Spurfolgeregelung bzw. Objektfolgeregelung als Spezialfall der Querführungsunterstützung verstanden, wenn diese mit hohem Automatisierungsgrad durchgeführt werden soll.

Unter Objektfolgeunterstützung wird nachfolgend eine reine Objektfolgeunterstützung verstanden, die lediglich auf der Basis des vorausfahrenden Führungsfahrzeugs durchgeführt wird. Unter Spurfolgeunterstützung wird hingegen sowohl eine reine Spurfolgeunterstützung verstanden, die lediglich auf der Basis der markierten Fahrspur durchgeführt wird, als auch die kombinierte Spur-Objektfolgeunterstützung, bei der die reine Spurfolgeunterstützung und die reine Objektfolgeunterstützung miteinander fusioniert werden.

Vorzugsweise wird die Querführungsunterstützung deaktiviert, wenn der Abstand zwischen dem Fahrzeug und dem Führungsfahrzeug auf einen Wert ansteigt, der größer ist als die vorbestimmte Abstandsgrenze oder wenn der Deichselwinkel die vorbestimmte Winkelgrenze betragsmäßig überschreitet.

Bedingung für die Bereitstellung der Querführungsunterstützung ist demnach, dass innerhalb eines durch die vorbestimmte Abstandgrenze bzw. durch die vorbestimmte Winkelgrenze definierten Nahbereichs vor dem Fahrzeug ein für eine Abstandsregelung geeigneten vorausfahrenden Fahrzeugs als Führungsfahrzeug erkannt wird, und dass das Fahrzeug dem Führungsfahrzeug abstandsgeregelt folgt. Ist diese Bedingung nicht bzw. nicht mehr erfüllt, wird die Querführungsunterstützung nicht bzw. nicht mehr angeboten.

Vorzugsweise wird die die Querführungsunterstützung immer dann als Spurfolgeunterstützung bzw. als kombinierte Spur-Objektfolgeunterstützung durchgeführt, wenn Fahrspurmarkierungen erfasst werden. Pendelbewegungen des Führungsfahrzeugs wirken sich damit nicht bzw. lediglich geringfügig auf die Querführung aus, solange Fahrspurmarkierungen vorhanden sind und erkannt werden.

Vorzugsweise wird eine Umschaltung von der Spurfolgeunterstützung bzw. kombinierten Spur-Objektfolgeunterstützung zur Objektfolgeunterstützung vorgenommen, wenn Fahrspurmarkierungen nicht mehr erfasst werden. Die Querführungsunterstützung ist damit auch bei einem Wechsel von einem Zustand, in dem Fahrspurmarkierungen erkannt werden zu einem Zustand, in dem Fahrspurmarkierungen nicht mehr erkannt werden verfügbar. Pendelbewegungen des Führungsfahrzeugs können sich dann zwar als Störungen auf die Querführung des Fahrzeugs auswirken, solche Störungen werden aber zugunsten einer höheren Verfügbarkeit der Querführung in Kauf genommen.

Vorzugsweise wird die Querführungsunterstützung nur dann als Objektfolgeunterstützung durchgeführt wird, wenn Fahrspurmarkierungen nicht erfasst werden. Störungen aufgrund von Pendelbewegungen des Führungsfahrzeugs wirken sich damit nur dann auf die Querführung aus, wenn Fahrspurmarkierungen nicht erkannt werden.

Vorzugsweise wird automatisch von der Objektfolgeunterstützung zur Spurfolgeunterstützung bzw. zur kombinierten Spur-Objektfolgeunterstützung umgeschaltet, wenn Fahrspurmarkierungen erstmalig oder erneut erfasst werden. Kurzzeitige Unterbrechungen der Fahrspurmarkierungen oder Störungen bei der Erkennung der Fahrspurmarkierungen wirken sich damit allenfalls in einem geringen und vom Fahrer kaum wahrnehmbaren Maße auf die Querführungsunterstützung aus.

In einer vorteilhaften Weiterbildung des Verfahrens werden bei aktiver Spurfolgeunterstützung Objekte erfasst, an denen das Führungsfahrzeug seitlich vorbeifährt und die einen vom Fahrzeug in der Fahrspur nutzbaren Fahrbereich einengen, und die Spurfolgeunterstützung wird deaktiviert, wenn festgestellt wird, dass die Breite des nutzbaren Fahrbereichs abzüglich eines vorgebbaren Sicherheitsseitenabstands geringer ist als die Breite des Fahrzeugs.

In einer weiteren vorteilhaften Weiterbildung des Verfahrens werden bei aktiver Objektfolgeunterstützung Objekte detektiert, an denen das Führungsfahrzeug seitlich vorbeifährt, und die Objektfolgeunterstützung wird deaktiviert, wenn festgestellt wird, dass für das Fahrzeug nicht ausreichend Freiraum vorhanden ist, um die Objekte unter Einhaltung von vorgebbaren Sicherheitsseitenabständen zu passieren.

Vorzugsweise wird bei Deaktivierung der Querführungsunterstützung eine Aufforderung zur Übernahme der Querführung an den Fahrer des Fahrzeugs ausgegeben.

Ein erfindungsgemäßes Fahrerassistenzsystem für ein Fahrzeug zur Durchführung des Verfahrens nach einem der vorhergehenden Ansprüche umfasst eine radarbasierte und/oder videobasierte Objekterfassungseinheit zur Bereitstellung von Objektdaten betreffend Objekte in der vorderen und seitlichen Umgebung des Fahrzeugs, ein videobasiertes Fahrspurerkennungssystem zur Bereitstellung von Spurdaten betreffend den Verlauf einer vom Fahrzeug befahrenen markierten Fahrspur und eine Steuereinrichtung zur Erzeugung von Stellsignalen zur Steuerung der Längsbewegung und Querbewegung des Fahrzeugs in Abhängigkeit der bereitgestellten Objektdaten und Spurdaten.

Die Erfindung wird nachfolgend anhand von Ausführungsbeispielen unter Bezugnahme auf die Figuren näher beschrieben. Es zeigen
- Fig. 1:: ein vereinfachtes Blockdiagramm eines Fahrerassistenzsystems, das in einem Fahrzeug zur Durchführung des erfindungsgemäßen Verfahrens eingesetzt wird,
- Fig. 2:: eine schematische Darstellung einer vom Fahrerassistenzsystem gemäß Figur 1 zu bewältigenden Verkehrssituation auf einer Straße mit spurbegrenzenden Fahrspurmarkierungen,
- Fig.3:: eine schematische Darstellung einer vom Fahrerassistenzsystem gemäß Figur 1 zu bewältigenden Verkehrssituation auf einer Straße ohne Fahrspurmarkierungen.

Einander entsprechende Teile sind in allen Figuren mit gleichen Bezugszeichen versehen.

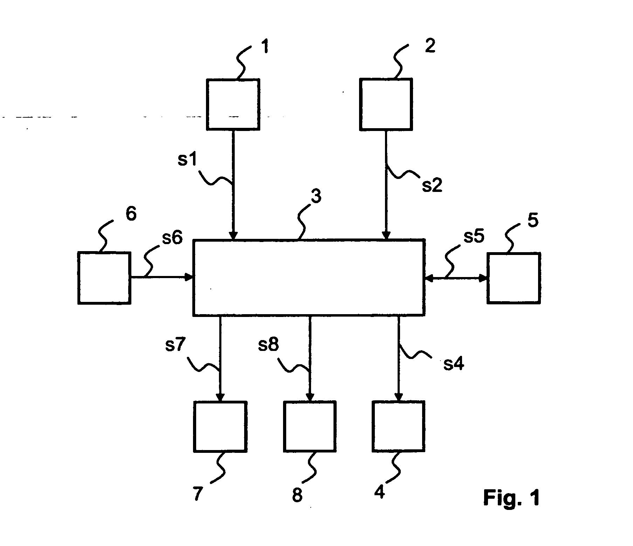

Das in Figur 1 gezeigte Fahrerassistenzsystems umfasst ein Fahrspurerkennungssystem 1, ein Objekterkennungssystem 2, eine Steuereinrichtung 3, eine Lenkstelleinrichtung 4, eine Mensch-Maschine-Schnittstelle 5, eine Sensoreinrichtung 6, eine Motormomentstelleinrichtung 7 und eine Bremsmomentsstelleinrichtung 8.

Das Fahrspurerkennungssystem 1 arbeitet videobasiert und erkennt anhand von Fahrspurmarkierungen, die als Fahrspurbegrenzungen auf der vom Fahrzeug befahrenen Fahrbahn aufgebracht sind, den Fahrspurverlauf der momentan befahrenen Fahrspur und erzeugt Spurdaten s1, die die Lage des Fahrzeugs relativ zur Fahrspur und den Verlauf der Fahrspur repräsentieren und gibt diese Spurdaten s1 an die Steuereinrichtung 3 aus. Alternativ oder zusätzlich kann der Verlauf der Fahrspur und die Lage des Fahrzeugs relativ zur Fahrspur auch mit Hilfe von Magnetnägeln ermittelt werden, die in Fahrbahn eingebracht sind und vom Fahrzeug aus detektiert werden, oder mit Hilfe eines satellitengestützten Positionsbestimmungssystem anhand von digitalen Kartendaten, oder durch Erkennung von bautichen Begrenzungen, wie z.B. Bordsteinen oder Randsteinen.

Die Objekterfassungseinheit 2 tastet das vordere und seitliche Umfeld des Fahrzeugs mit einem Radar- oder Laserstrahl ab, um Objekte vor dem Fahrzeug zu Erkennen und um deren Position relativ zum Fahrzeug zu ermitteln und gibt entsprechende Objektdaten s2 and die Steuereinrichtung 3 aus. Selbstverständlich ist es denkbar, die Objekterfassung auch videobasiert mit dem Fahrspurerkennungssystem 1 vorzunehmen. Des Weiteren besteht die Möglichkeit die Objektdaten durch eine Fahrzeug-Fahrzeug-Kommunikation zu ermitteln, beispielsweise basierend auf Positionsdaten eines dem Fahrzeug vorausfahrenden Fahrzeugs, die von diesem ermittelt über eine Funkverbindung ausgesendet werden.

Die Sensoreinrichtung 6 erfasst den aktuellen Fahrzustand des Fahrzeugs, einschließlich dessen Fahrgeschwindigkeit und liefert entsprechende Zustandsdaten s6 an die Steuereinrichtung 3.

Die Steuereinrichtung 3 ist eingerichtet, eine Querführungsunterstützungsfunktion und eine Längsführungsunterstützungsfunktion zu erfüllen.

Die Längsführungsunterstützungsfunktion beinhaltet dabei eine Funktion zur Abstandsregelung des Abstands zwischen dem Fahrzeug und einem diesem vorausfahrenden erfassten Führungsfahrzeug auf einen von der Fahrgeschwindigkeit des Fahrzeugs abhängigen Sollabstand sowie eine Funktion zur Geschwindigkeitsregelung der Fahrgeschwindigkeit der Fahrzeugs auf eine vom Fahrer vorgebbare Wunschgeschwindigkeit. Die Abstandsregelung ist dabei dann aktiv, wenn die Geschwindigkeitsregelung eine Unterschreitung des Sollabstands zur Folge hätte und die Geschwindigkeitsregelung ist dann aktiv, wenn kein Führungsfahrzeug erfasst worden ist oder wenn die Abstandsregelung bei erfasstem Führungsfahrzeug eine Überschreitung der Wunschgeschwindigkeit zur Folge hätte. Derartige Regelungen sind unter der Bezeichnung Abstandsregeltempomat oder ACC (Auto Cruise Control) hinlänglich bekannt.

Die Querführungsunterstützungsfunktion mit hohem Automatisierungsgrad umfasst eine Funktion zur Spurfolgeunterstützung durch Spurregelung, die den Fahrer beim Führen des Fahrzeugs längs einer durch Fahrspurmarkierungen markierten Fahrspur unterstützt, sowie eine Funktion zur Objektfolgeunterstützung, die den Fahrer beim Nachführen des Fahrzeugs entlang einer Bewegungsspur des Führungsfahrzeugs entsprechend der eingangs genannten Deichselregelung unterstützt. Dabei wird die Querführungsunterstützung wahlweise entweder als Spurfolgeunterstützung bzw. kombinierte Spur-Objektfolgeunterstützung oder als reine Querfolgeunterstützung durchgeführt, wobei eine Umschaltung zwischen diesen beiden Unterstützungsarten vorteilhafterweise derart erfolgt, dass die Wirkung der einen Unterstützungsart allmählich erhöht wird und die Wirkung der anderen Unterstützungsart in dem Maße reduziert wird, wie diese Erhöhung erfolgt, so dass ein allmählicher Übergang von der einen Unterstützungsart zur anderen Unterstützungsart stattfindet und im Übergangsbereich beide Unterstützungsarten wirksam sind.

Die Steuereinrichtung 3 steuert zur Erfüllung der Querführungsunterstützungsfunktion eine Lenkstelleinrichtung 4 an. Diese variiert in Abhängigkeit eines von der Steuereinrichtung 3 als Lenkanweisung ausgegebenen Lenkstellsignals s4 den Lenkwinkel an den lenkbaren Rädern des Fahrzeugs und bewirkt somit eine den Fahrer unterstützende Querführung des Fahrzeugs. Das Lenkstellsignal s4 entspricht dabei einem Zusatzlenkmoment und/oder einem Zusatzlenkwinkel, das bzw. der einem vom Fahrer durch eine Lenkradbetätigung vorgegebenen Lenkmoment oder Lenkwinkel additiv überlagert wird. Die Lenkstelleinrichtung 4 ist vorteilhafterweise als Lenkmomentsteller ausgeführt, so dass dem Fahrer in einer ersten Eskalationsstufe eine haptische Rückmeldung am Lenkrad gegeben wird, durch die er angewiesen wird, die Lenkaufgabe wahrzunehmen. Die Lenkanweisung kann in einer zweiten Eskalationsstufe eine additiv zum Zusatzlenkmoment aufgebrachte haptische Rückmeldung in Form von einer Vibration am Lenkrad des Fahrzeugs bewirken.

Zur Erfüllung der Abstandsregelfunktion steuert die Steuereinrichtung 3 über ein Motormomentstellsignal s7 und ein Bremsmomentstellsignal s8 die Motormomentstelleinrichtung 7 und die Bremsmomentsstelleinrichtung 8 an, um durch Variation des Antriebs- und/oder Bremsmoments den Abstand zu dem erkannten vorausfahrenden Führungsfahrzeug zu regeln.

Die Mensch-Maschine-Schnittstelle 5 hat die Aufgabe, dem Fahrer die Möglichkeit zu geben, auszuwählen, ob ihm die Längsführungsunterstützung und Querführungsunterstützung als Unterstützungsmaßnahmen angeboten werden sollen. Die Mensch-Maschine-Schnittstelle 5 hat weiterhin die Aufgabe, den Fahrer über Betriebszustände des Fahrerassistenzsystems zu informieren. Die Mensch-Maschine-Schnittstelle 5 kommuniziert hierzu über Schnittstellendaten s5 mit der Steuereinrichtung 3.

Die Mensch-Maschine-Schnittstelle 5 weist in der Figur nicht gezeigte Eingabemittel zur Aktivierung der Längsführungsunterstützungsfunktion auf. Die Eingabemittel können insbesondere als ein Multifunktionsbedienhebel ausgeführt sein, der zur Aktivierung der Längsführungsunterstützungsfunktion in eine bestimmte Richtung ausgelenkt werden muss. Falls die Abstandsregelfunktion den Abstand zum Führungsfahrzeug auch im niederen Geschwindigkeitsbereich bis zum Stillstand regelt, ist es empfehlenswert, die Abstandsregelfunktion nach einem Stillstand zu unterbrechen erst nach einer erneuten fahrerseitigen Aktivierungsbetätigung wieder zu aktivieren. Diese erneute fahrerseitige Aktivierungsbetätigung kann darin bestehen, dass der Fahrer den Multifunktionshebel erneut betätigt, oder dass er das Fahrpedal des Fahrzeugs betätigt. Das Fahrpedal fungiert somit ebenfalls als Eingabemittel zur Aktivierung der Längsführungsunterstützungsfunktion, sofern letztere aufgrund eines Stillstand unterbrochen worden ist.

Die Mensch-Maschine-Schnittstelle 5 weist weiterhin eine in der Figur nicht gezeigte Anzeigeeinrichtung auf, über die der Fahrer über den aktuellen Betriebzustand des Fahrerassistenzsystems informiert wird. Wenn die Voraussetzungen zur Durchführung der Unterstützung nicht mehr erfüllt sind, wird der Fahrer über die Anzeigeeinrichtung aufgefordert, die Fahrzeugführung vollständig zu übernehmen.

Die Steuereinrichtung 3 ist derart eingerichtet, dass die Querführungsunterstützung mit hohem Automatisierungsgrad nur dann als Unterstützungsmaßnahme angeboten wird, wenn vorbestimmte Betriebsbedingungen erfüllt sind und nach einer Aktivierung deaktiviert wird, sobald die vorbestimmten Bedingungen nicht mehr erfüllt sind. Die vorbestimmten Bedingungen umfassen dabei mindestens die Bedingungen, dass die Abstandsregelung aktiv ist, d.h. dass ein Führungsfahrzeug erfasst worden ist und dass momentan ein abstandsregelnder Eingriff bezogen auf das erfasste Führungsfahrzeug durchgeführt wird, sowie die Bedingung, dass sich das Führungsfahrzeug innerhalb eines vorbestimmten Nahbereichs vor dem Fahrzeug befindet, d.h. dass der Abstand zwischen dem Fahrzeug und dem Führungsfahrzeug geringer ist als eine vorbestimmte Abstandsgrenze und dass ein als Deichselwinkel bezeichneter Sichtwinkel vom Fahrzeug zu dem Führungsfahrzeug geringer ist als eine vorbestimmte Winkelgrenze. Die Querführungsunterstützung mit hohem Automatisierungsgrad wird demnach deaktiviert, sobald das sich zunächst im Nahbereich befindende Führungsfahrzeug den Nabereich nach vorne oder zur Seite hin verlässt, oder sobald die Abstandsregelung nicht mehr aktiv ist, was beispielsweise dann der Fall ist, wenn die Betriebsart der Längsführungsunterstützungsfunktion von der Abstandsregelung zur Geschwindigkeitsregelung umgeschaltet wird.

Die Querführungsunterstützung mit hohem Automatisierungsgrad wird grundsätzlich als Spurfolgeunterstützung bzw. kombinierte Spur-Objektfolgeunterstützung durchgeführt, sofern Fahrspurmarkierungen erfasst werden, und sie wird ausnahmsweise nur dann als reine Objektfolgeunterstützung durchgeführt, wenn Fahrspurmarkierungen nicht erfasst werden.

Bei einem Wechsel von einem Zustand, in dem Fahrspurmarkierungen erfasst werden zu einem Zustand, in dem Fahrspurmarkierungen nicht mehr erfasst werden, findet eine automatische Umschaltung von der Spurfolgeunterstützung bzw. kombinierten Spur-Objektfolgeunterstützung zur reinen Objektfolgeunterstützung statt. Werden die Fahrspurmarkierungen anschließend erneut erfasst, wird automatisch von der Objektfolgeunterstützung in die Spurfolgeunterstützung bzw. kombinierten Spur-Objektfolgeunterstützung zurückgeschaltet.

Bei der Querführungsunterstützung werden zusätzlich Objekte berücksichtigt, an denen das Fahrzeug bei der Verfolgung des Führungsfahrzeugs seitlich vorbei fahren muss. Wenn solche, den nutzbaren Fahrbereich einengende Objekte erkannt werden, und wenn weiterhin erkannt wird, dass nicht auseichend Freiraum neben den Objekten vorhanden ist, um das Fahrzeug mit einem vorgebbaren Sicherheitsseitenabstand zum jeweiligen Objekt und zu den ggf. vorhandenen Fahrspurmarkierungen vorbeizuführen, wird die Querführungsunterstützung und vorzugsweise auch die Längsführungsunterstützung deaktiviert und eine Übernahmeaufforderung an den Fahrer ausgegeben, mit dem Ziel, den Fahrer zu informieren, dass die Querführungsunterstützung nicht mehr verfügbar ist, und ihn aufzufordern, die Querführung zu übernehmen. Damit wird in vom Fahrerassistenzsystem nicht sicher bewältigbaren kritischen Situationen die Verantwortung über die Fahrzeugführung vollständig auf den Fahrer übertragen.

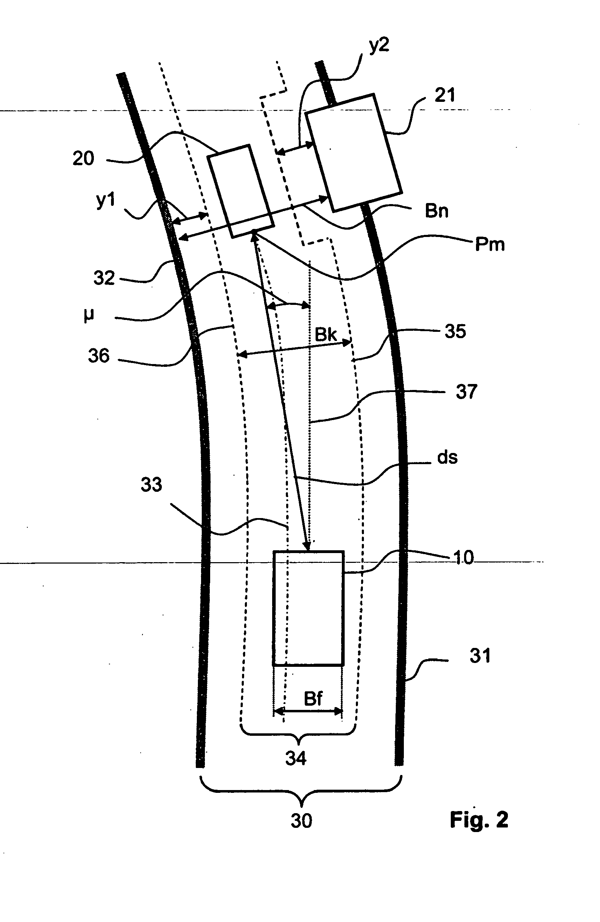

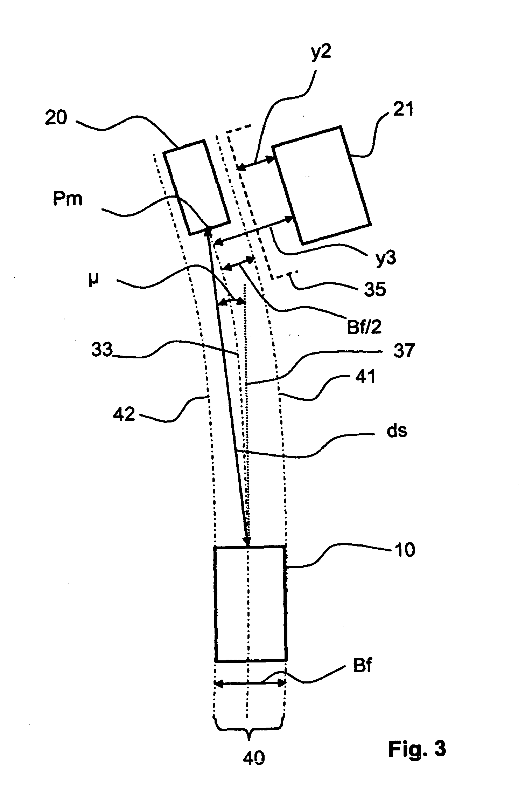

Die Details einer derartigen Berücksichtigung von Objekten werden nachfolgend anhand der Figuren 2 und 3 näher beschrieben.

Figur 2 zeigt eine Straße mit einer durch Fahrspurmarkierungen 31, 32 begrenzten Fahrspur 30 in der ein mit dem Fahrerassistenzsystem gemäß Figur 1 ausgestattetes Fahrzeug 10 abstandsgeregelt in einem Sollabstand ds einem in der gleichen Fahrspur 30 vorausfahrenden Führungsfahrzeug 20 folgt. Das Führungsfahrzeug 20 passiert ein in die Fahrspur 30 hineinragendes Objekt 21. Ein Punkt Pm markiert einen lateralen Mittelpunkt am Führungsfahrzeug 20, beispielsweise am Heck des Führungsfahrzeugs 20. Eine strichpunktierte Linie 33 markiert die Bewegungsspur des Führungsfahrzeugs 20, d.h. die Ortskurve des lateralen Mittelpunktes Pm. Die Linien 35 und 36 markieren Grenzen, die als Sicherheitsseitenabstand y1, y2 zu den Fahrspurmarkierungen 31, 32 bzw. dem den nutzbaren Fahrbereich einengenden Objekt 21 eingehalten werden sollen. Die Sicherheitsseitenabstände y1, y2 zu den Fahrspurmarkierungen bzw. Objekten können unterschiedlich gewählt werden, insbesondere kann der zu den Fahrspurmarkierung 31, 32 einzuhaltende Sicherheitsseitenabstand y1 geringer sein als der zum Objekt 21 einzuhaltende Sicherheitsseitenabstand y2. Eine punktiert dargestellte Linie 37 markiert die Längsachse des Fahrzeugs 10 und der Doppelpfeil µ markiert den als Deichselwinkel bezeichneten Winkel zwischen der Längsachse 37 des Fahrzeugs 10 und der Sichtlinie vom Fahrzeug 20 zum lateralen Mittelpunkt Pm des Führungsfahrzeugs 20, d.h. den Sichtwinkel vom Fahrzeug 10 zum Führungsfahrzeug 20. Der Doppelpfeil Bn bezeichnet die Breite des nutzbaren Fahrbereichs zwischen dem Objekt 21 und der diesem gegenüberliegenden Fahrspurmarkierung 32. Ein weiterer Doppelpfeil Bf markiert die Breite des Fahrzeugs 10.

Im vorliegenden Fall sind die vorbestimmten Betriebsbedingungen für die Querführungsunterstützung erfüllt, d.h. das Fahrzeug 10 folgt dem Führungsfahrzeug 20 abstandsgeregelt und das Führungsfahrzeug 20 befindet sich noch im vorbestimmten Nahbereich des Fahrzeugs 10, d.h. innerhalb der vorbestimmten Abstandsgrenze und innerhalb der vorbestimmten Winkelgrenze. Die Querführungsunterstützung erfolgt aufgrund der vorhandenen und erfassten Fahrspurmarkierungen 31, 32 als Spurfolgeunterstützung bzw. kombinierte Spur-Objektfolgeunterstützung. Sobald festgestellt wird, dass die Breite Bn des nutzbaren Fahrbereich abzüglich des lateral nach links und rechts einzuhaltenden Sicherheitsseitenabstands y1, y2 geringer ist als die Breite Bf des Fahrzeugs 10, wird die Querführungsunterstützung deaktiviert, d.h. die Deaktivierung erfolgt, wenn die Bedingung Bf < Bn - (y1 + y2) erfüllt ist. Der Fahrer wird zeitlich vor mit der Deaktivierung durch Ausgabe einer entsprechenden Übernahmeaufforderung zur Übernahme der Querführung aufgefordert.

Figur 3 zeigt die gleiche Situation für den Fall, dass auf der Straße keine Fahrspurmarkierungen vorhanden sind. In diesem Fall wird die Querführungsunterstützung als reine Objektfolgeunterstützung durchgeführt. Die Linien 41, 42 markieren dabei die Grenzen eines Korridors 40, in dem das Fahrzeug 10 dem Führungsfahrzeug 20 nachgeführt wird. Der Doppelpfeil y3 markiert den lateralen Abstand der Bewegungsspur 33 zu dem Objekt 21. Wenn dieser laterale Abstand y3 geringer ist als der zum Objekt 21 einzuhaltende Seitensicherheitsabstand y2 zuzüglich der halben Breite Bf/2 des Fahrzeugs 10, d.h. wenn der Korridor 40 nicht mindestens um den Seitensicherheitsabstand y2 von dem Objekt 21 beabstandet ist, wird die Objektfolgeunterstützung mit Ausgabe einer Aufforderung an den Fahrer, die Querführung zu übernehmen, deaktiviert.

## Patentansprüche

1. Verfahren zur Längs- und Querführungsunterstützung des Fahrers eines Fahrzeugs (10), wobei
- die Längsführungsunterstützung als Abstandsregelung zur Regelung des Abstands zwischen dem Fahrzeug (10) und einem diesem vorausfahrenden Führungsfahrzeug (20) durchgeführt wird,
- die Querführungsunterstützung wahlweise als eine Objektfolgeunterstützung zur Führung des Fahrzeugs (10) nach einer Bewegungsspur (33) des vorausfahrenden Führungsfahrzeugs (10) oder als eine Spurfolgeunterstützung zur Führung des Fahrzeugs (10) längs einer markierten Fahrspur (30) bzw. als eine kombinierte Spur-Objektfolgeunterstützung durchgeführt wird,
- die Querführungsunterstützung nur bei Erfüllung von vorbestimmten Betriebsbedingungen verfügbar ist
- und die vorbestimmten Betriebsbedingungen die Bedingung umfassen, dass die Abstandsregelung aktiv ist,
**dadurch gekennzeichnet, dass**
die vorbestimmten Bedingungen weiterhin die Bedingung umfassen, dass der Abstand (ds) zwischen dem Fahrzeug (10) und dem Führungsfahrzeug (20) geringer ist als eine vorbestimmte Abstandsgrenze und/oder dass ein Deichselwinkel (µ) als Sichtwinkel vom Fahrzeug (10) zum Führungsfahrzeug (20) betragsmäßig geringer ist als eine vorbestimmte Winkelgrenze.

2. Verfahren nach Anspruch 1,
**dadurch gekennzeichnet, dass**
die Querführungsunterstützung immer dann als Spurfolgeunterstützung bzw. kombinierte Spur-Objektfolgeunterstützung durchgeführt wird, wenn Fahrspurmarkierungen (31, 32)erfasst werden.

3. Verfahren nach Anspruch 2,
**dadurch gekennzeichnet, dass**
eine Umschaltung von der Spurfolgeunterstützung bzw. kombinierten Spur-Objektfolgeunterstützung zur Objektfolgeunterstützung vorgenommen wird, wenn Fahrspurmarkierungen (31, 32) nicht mehr erfasst werden.

4. Verfahren nach einem der vorhergehenden Ansprüche,
**dadurch gekennzeichnet, dass**
die Querführungsunterstützung nur dann als Objektfolgeunterstützung durchgeführt wird, wenn Fahrspurmarkierungen nicht erfasst werden.

5. Verfahren nach Anspruch 4,
**dadurch gekennzeichnet, dass**
eine Umschaltung von der Objektfolgeunterstützung zur Spurfolgeunterstützung bzw. kombinierten Spur-Objektfolgeunterstützung vorgenommen wird, wenn Fahrspurmarkierungen (31, 32) erstmalig oder erneut erfasst werden.

6. Verfahren nach einem der vorherigen Ansprüche,
**dadurch gekennzeichnet, dass**
bei aktiver Spurfolgeunterstützung bzw. kombinierter Spur-Objektfolgeunterstützung Objekte (21) erfasst werden, an denen das Führungsfahrzeug (20) seitlich vorbeifährt und die einen vom Fahrzeug (10) in der Fahrspur (30) nutzbaren Fahrbereich (Bn) einengen,
und dass die Spurfolgeunterstützung bzw. die kombinierter Spur-Objektfolgeunterstützung deaktiviert wird, wenn die Breite (Bn) des nutzbaren Fahrbereichs abzüglich eines vorgebbaren linken und rechten Sicherheitsseitenabstands (y1, y2) geringer ist als die Breite (Bf) des Fahrzeugs (10).

7. Verfahren nach einem der vorhergehenden Ansprüche,
dass bei aktiver Objektfolgeunterstützung Objekte (21) detektiert werden, an denen das Führungsfahrzeug (20) seitlich vorbeifährt,
und dass die Objektfolgeunterstützung deaktiviert wird, wenn für das Fahrzeug (10) nicht ausreichend Freiraum vorhanden ist, um die Objekte (21) unter Einhaltung von vorgebbaren Sicherheitsseitenabständen (y2) zu passierenden.

8. Verfahren nach einem der vorhergehenden Ansprüche,
**dadurch gekennzeichnet, dass**
die Querführungsunterstützung deaktiviert wird, wenn der Abstand (ds) zwischen dem Fahrzeug (10) und dem Führungsfahrzeug (20) auf einen Wert ansteigt, der größer ist als die vorbestimmte Abstandsgrenze.

9. Verfahren nach einem der vorhergehenden Ansprüche, **dadurch gekennzeichnet, dass**
bei Deaktivierung der Querführungsunterstützung eine Aufforderung zur Übernahme der Querführung an den Fahrer des Fahrzeugs ausgegeben wird.

10. Fahrerassistenzsystem für ein Fahrzeug (10) zur Durchführung des Verfahrens nach einem der vorhergehenden Ansprüche, mit einem videobasierten Fahrspurerkennungssystem (1) zur Bereitstellung von Spurdaten (s1) betreffend den Verlauf einer vom Fahrzeug (10) befahrenen markierten Fahrspur (30), mit einer radarbasierten und/oder videobasierten Objekterfassungseinheit (2) zur Bereitstellung von Objektdaten (s2) betreffend Objekte (20, 21) in der vorderen Umgebung des Fahrzeugs (10) und mit einer Steuereinrichtung (3) zur Erzeugung von Stellsignalen (s4, s7, s8) zur Steuerung Längsbewegung und Querbewegung des Fahrzeugs (10) in Abhängigkeit der bereitgestellten Objektdaten (s2) und Spurdaten (s1).

## Claims

1. Method for the longitudinal and lateral guidance assistance of the driver of a vehicle (10), wherein
- the longitudinal guidance assistance is carried out as proximity control for controlling the distance between the vehicle (10) and a guide vehicle (20) travelling ahead,
- the lateral guidance assistance is carried out optionally either as an object tracking assistance to guide the vehicle (10) in accordance with a movement lane (33) of the guide vehicle (20) travelling ahead, or as a lane tracking assistance to guide the vehicle (10) along a marked lane (30), or as a combined lane and object tracking assistance,
- the lateral guidance assistance is available only if predefined operating conditions are fulfilled
- and the predefined operating conditions include the condition that the proximity control is active,
**characterised in that**
the predefined operating conditions further include the condition that the distance (ds) between the vehicle (10) and the guide vehicle (20) is less than a predefined distance limit and/or that a drawbar angle (µ) as an angle of sight from the vehicle (10) to the guide vehicle (20) is smaller than a predefined angle limit.

2. Method according to claim 1,
**characterised in that**
the lateral guidance assistance is carried out as lane tracking assistance or as combined lane and object tracking assistance whenever lane markings (31, 32) are detected.

3. Method according to claim 2,
**characterised in that**
a change-over from lane tracking assistance or combined lane and object tracking assistance to object tracking assistance is performed if lane markings (31, 32) are no longer detected.

4. Method according to any of the preceding claims,
**characterised in that**
the lateral guidance assistance is carried out as object tracking assistance only if lane markings are not detected.

5. Method according to claim 4,
**characterised in that**
a change-over from object tracking assistance to lane tracking assistance or combined lane and object tracking assistance is performed if lane markings (31, 32) are detected for the first time or again.

6. Method according to any of the preceding claims,
**characterised in that**
if the lane tracking assistance or combined lane and object tracking assistance is active, objects (21) which the guide vehicle (20) passes laterally and which narrow a driving region (Bn) which can be used by the vehicle (10) in the lane (30) are detected,
and **in that** the lane tracking assistance or combined lane and object tracking assistance is deactivated if the width (Bn) of the usable driving region minus a presettable left- and right-hand safety distance (y1, y2) is less than the width (Bf) of the vehicle (10).

7. Method according to any of the preceding claims,
**characterised in that**
if the object tracking assistance is active, objects (21) which the guide vehicle (20) passes laterally are detected,
and **in that** the object tracking assistance is deactivated if there is not sufficient free space for the vehicle (20) to pass the objects (21) while maintaining presettable safety distances (y2).

8. Method according to any of the preceding claims,
**characterised in that**
the lateral guidance assistance is deactivated if the distance (ds) between the vehicle (10) and the guide vehicle (20) increases to a value which exceeds the defined distance limit.

9. Method according to any of the preceding claims,
**characterised in that**
if lateral the guidance assistance is deactivated, the driver of the vehicle is instructed to take over lateral guidance.

10. Driver assistance system for a vehicle (10) for carrying out the method according to any of the preceding claims, the system comprising a video-based lane detection system (1) for the provision of lane data (s1) relating to the course of a marked lane (30) on which the vehicle (10) travels, further comprising a radar- and/or video-based object detection unit (2) for the provision of object data (s2) relating to objects (20, 21) in the front environment of the vehicle (10), and further comprising a control device (3) for the generation of actuating signals (s4, s7, s8) for the control of the longitudinal and lateral movement of the vehicle (10) as a function of the object data (s2) and lane data (s1) provided.

## Revendications

1. Procédé d'aide au guidage longitudinal et latéral destiné au conducteur d'un véhicule (10),
- l'aide au guidage longitudinal étant réalisée en tant que régulation de la distance entre le véhicule (10) et un véhicule de guidage (20) précédant le véhicule (10),
- et l'aide au guidage latéral étant réalisée soit en tant que régulation du suivi d'objets pour guider le véhicule (10) d'après la trajectoire de déplacement (33) du véhicule précédant (10) soit en tant que régulation du suivi de voie pour guider le véhicule (10) le long d'un marquage de voie (30), soit encore en tant que combinaison des deux types de régulation susmentionnés,
- l'aide au guidage latéral étant seulement disponible lorsque des conditions de fonctionnement prédéfinies sont remplies,
- et les conditions de fonctionnement prédéfinies comportant que la régulation de la distance étant activée, **caractérisé en ce que** les conditions de fonctionnement prédéfinies comportent en outre que la distance (ds) entre le véhicule (10) et le véhicule de guidage (20) est inférieure à une distance seuil prédéfinie et / ou qu'un angle de timon (µ), en tant qu'angle de vue du véhicule (10) par rapport au véhicule de guidage (20) est inférieur à un angle seuil prédéfini.

2. Procédé selon la revendication 1, **caractérisé en ce que** l'aide au guidage latéral est toujours réalisé en tant que régulation du suivi de voie ou en tant que régulation combinée du suivi d'objet / voie lorsque des marquages de voie (31, 32) sont détectés.

3. Procédé selon la revendication 2, **caractérisé en ce qu'**un basculement de la régulation du suivi de voie vers la régulation de suivi d'objet / de voie est réalisé pour réguler le suivi d'objet lorsque des marquages de voie (31, 32) ne sont plus détectés.

4. Procédé selon l'une quelconque des revendications précédentes, **caractérisé en ce que** l'aide au guidage latéral est réalisé uniquement en tant que régulation du suivi d'objets lorsque des marquages de voie ne sont pas détectés.

5. Procédé selon la revendication 4, **caractérisé en ce qu'**un basculement de la régulation du suivi d'objet vers la régulation de suivi de voie ou vers la régulation combinée de suivi d'objet/voie est réalisé lorsque des marquages de voie (31, 32) sont détectés pour la première fois ou de nouveau détectés.

6. Procédé selon l'une quelconque des revendications précédentes, **caractérisé en ce que** la régulation de suivi de voie active ou la régulation combinée de suivi d'objets / de voie détecte des objets (21) à côté desquels passe le véhicule de guidage (20) et qui limitent une zone de conduite (Bn) exploitable dans la voie par le véhicule (10), et **en ce que** la régulation de suivi de voie ou la régulation combinée de suivi d'objets / de voie est désactivée lorsque la largeur (Bn) de la zone de conduite exploitable moins une distance latérale de sécurité (y1, y2) droite et gauche définie est inférieure à la largeur (Bf) du véhicule (10).

7. Procédé selon l'une quelconque des revendications précédentes, **caractérisé en ce que** lorsque la régulation du suivi d'objets active détecte des objets (21) à côté desquels passe le véhicule de guidage (20), **en ce que** la régulation de suivi d'objets est désactivée lorsqu'il n' y a pas un espace libre suffisant pour le véhicule (10) pour passer à côté des objets (21) en conservant les distances latérales de sécurité (y2) définies.

8. Procédé selon l'une quelconque des revendications précédentes, **caractérisé en ce que** l'aide au guidage latéral est désactivée lorsque la distance (ds) entre le véhicule (10) et le véhicule de guidage (20) s'élève à une valeur qui est supérieure à la distance seuil prédéfinie.

9. Procédé selon l'une quelconque des revendications précédentes, **caractérisé en ce que** lors de la désactivation de l'aide au guidage latéral un signal pour appliquer un guidage latéral est délivré au conducteur du véhicule.

10. Système d'assistance au conducteur pour un véhicule (10) destiné à réaliser le procédé selon l'une quelconque des revendications précédentes, comprenant un système de reconnaissance de voie (1) sur la base de vidéo mettant à disposition des données de voie (s1) concernant le tracé d'une voie (30) marquée parcourue par le véhicule (10), une unité de détection d'objets (2) sur la base de vidéo et/ou de radar mettant à disposition des données d'objets (s2) concernant des objets (20, 21) dans l'environnement avant du véhicule (10) et un dispositif de commande (3) qui génère des signaux de régulation (s4, s7, s8) pour la commande du mouvement longitudinal et du mouvement latéral du véhicule (10) en fonction des données d'objets (s2) et des données de voie (s1) mises à disposition.
